# EUROPÄISCHE PATENTSCHRIFT

(11) **EP 2 700 596 B1**
(45) Veröffentlichungstag und Bekanntmachung des Hinweises auf die Patenterteilung: **19.11.2014**
(21) Anmeldenummer: 13004152.8
(22) Anmeldetag: 22.08.2013
(51) Int. Cl.: B65G 1/137

(54) **Kommissioniersystem**
Picking system
Système de préparation de commandes

(30) Priorität: 22.08.2012 DE 102012016552; 02.05.2013 DE 102013007461
(43) Veröffentlichungstag der Anmeldung: 26.02.2014
(73) Patentinhaber: Safelog GmbH, 85551 Kirchheim bei München (DE)
(72) Erfinder: Wolter, Michael, 85551 Kirchheim bei München (DE)
(74) Vertreter: Grättinger Möhring von Poschinger Patentanwälte Partnerschaft

(56) Entgegenhaltungen:
- EP-A1- 1 258 438
- EP-A1- 2 554 496
- WO-A2-2005/063607
- DE-A1-102008 043 879

## Beschreibung

Die vorliegende Erfindung betrifft ein Kommissionier-system nach dem Oberbegriff des Anspruchs 1 und ein Verfahren zur Durchführung von Kommissioniervorgängen unter Verwendung eines solchen Kommissioniersystems.

Derartige Kommissioniersysteme sind aus dem Stand der Technik bekannt und werden bevorzugt im produzierenden Gewerbe oder in der Logistikindustrie zur Kommissionierung verschiedenster Behältnisse oder darin befindlicher Gegenstände bzw. Bauteile eingesetzt. Dabei müssen häufig - in vorgegebener Reihenfolge und möglichst fehlerfrei - spezifische Behältnisse oder Gegenstände aus dem Regal in das Kommissionierfahrzeug geladen werden oder z.B. zum Zwecke der Nachbestückung des Regals spezifische Behältnisse oder darin befindliche Gegenstände aus dem Kommissionierfahrzeug in das Lagerregal verfrachtet werden.

Die unter Zuhilfenahme eines solchen Kommissioniersystems durchzuführenden Kommissionierungsvorgänge betreffen somit die in der Regel manuell durch einen Kommissionierer durchzuführende Umlagerung eines spezifischen Behältnisses oder wenigstens eines darin befindlichen Bauteils aus dem Kommissionierfahrzeug in ein spezifisches Regalfach (= Einlagerung in das Regal) oder die (manuelle) Umlagerung eines spezifischen Behältnisses oder wenigstens eines darin befindlichen Bauteils aus einem spezifischen Regalfach in eine spezifische Behältnisaufnahme bzw. in ein darin angeordnetes Behältnis im Kommissionierfahrzeug (=Auslagerung aus dem Regal).

Als Behältnisse zur Aufnahme der verschiedenen Bauteile kommen dabei häufig standardisierte Kisten zur Verwendung, wobei im Regelfall in jedem Behältnis eine vorgegebene Anzahl untereinander identischer Bauteile bevorratet ist. Das auf einem Fahrweg vor dem wenigstens einen Regal verfahrbare Kommissionierfahrzeug dient dem Transport der zu kommissionierenden Behältnisse bzw. Gegenstände.

Für jeden Kommissioniervorgang der vorstehend genannten Art, der ein Ein- oder ein Auslagerungsvorgang sein kann, muss der Kommissionierer somit wissen, in oder aus welchem Regalfach ein Behältnis oder Gegenstand ein- bzw. ausgelagert werden soll und welche Behältnisaufnahme oder welches Behältnis auf Seiten des Kommissionierfahrzeugs hiervon betroffen ist.

Aus dem Stand der Technik sind bereits Kommissioniersystem der eingangs genannten Art bekannt. So zeigt die WO 2005/063607 A2 bereits ein Kommissioniersystem nach dem Oberbegriff des Anspruchs 1. Es umfasst ein Lagersystem mit einem spezifisch gestalteten Kommissionierfahrzeug, welches eine Mehrzahl von Aufnahmebehältnissen für Gegenstände aufweist, wobei die Aufnahmebehältnisse in dem Kommissionierfahrzeug dergestalt lageveränderbar geführt gelagert sind, dass nacheinander einzelne Aufnahmebehältnisse von einer vorgegebenen Bedienungsposition aus zugänglich sind. Somit kann dem Kommissionierer für einen spezifischen Kommissioniervorgang genau jenes Aufnahmebehältnis in die für ihn zugängliche Bedienposition gefahren werden, in welches ein aus dem Regal zu entnehmendes Bauteil umgelagert werden soll. Das Kommissionierfahrzeug kann ferner mindestens eine Leuchtmarkiereinrichtung aufweisen, mittels derer unter Einsatz einer geeigneten Datenverarbeitungseinrichtung spezifische Aufnahmen des Regals, aus denen Gegenstände zu entnehmen sind, optisch markiert werden können. Der technische Aufwand zur Ausstattung sämtlicher Kommissionierfahrzeuge mit einem solchen System ist jedoch vergleichsweise groß.

Weiterhin sind aus dem Stand der Technik bereits (Lager-)Regale mit einer Meldeeinrichtung bekannt, mit welcher der korrekte Zugriff auf ein spezifisches Regalfach im Rahmen eines Kommissioniervorgangs überwacht werden kann. So offenbart z.B. die EP 0994761 B1 ein Regal mit einer Mehrzahl von Fächern, wobei der Zugriff auf die verschiedenen Fächer mittels eines optischen Distanzscanners überwacht wird, dessen Messbereich sich vor der Stirnseite des Regals über eine Mehrzahl an Zugriffsöffnungen erstreckt. Durch eine Auswerteschaltung mit einer Speichereinheit für die Koordinaten der überwachten Zugriffsöffnungen und einer Vergleichseinheit zum Vergleich der Koordinaten eines von dem Distanzscanner detektierten, in das Messfeld eingedrungenen Fremdkörpers einerseits und der Koordinaten der Zugriffsöffnungen andererseits kann ein Zugriff auf jedes dieser Fächer registriert werden.

Dieses System kann also mit einfachen Mitteln feststellen, ob ein Behältnis oder Gegenstand aus dem richtigen Fach eines Regals entnommen wurde (bzw. in welches Fach ein Gegenstand oder Behältnis eingelagert wurde), kann allerdings keine Hilfestellung bei der Anzeige des von einem Kommissioniervorgang betroffenen Regalfachs leisten.

Aus der (vorveröffentlichten) EP 2 554 496 A1 nach Art. 53(4) Epü ist ferner ein Kommissionierleitsystem für ein Lager bekannt, bei welchem wenigstens ein schienengeführt verfahrbarer Lichtprojektor vorgesehen ist. Der Lichtprojektor wird durch ein Computersystem derart angesteuert, dass er so positioniert wird, dass er für eine jeweilige Kommissionierung von Lagerteilen eine vorgesehene Weganzeige, einen Richtungs- oder Ortshinweis zu einem Lagerplatz hin oder von dem Lagerplatz weg, eine Anzeige des Lagerplatzes oder eine Anzeige auf oder an dem Lagerplatz erkennbar projizieren kann.

Die Aufgabe der vorliegenden Erfindung ist es daher, ein flexibles und möglichst universell einsetzbares bzw. nachrüstbares Kommissioniersystem der eingangs genannten Art sowie ein Verfahren zur Durchführung von Kommissioniervorgängen bereitzustellen, welche einem Kommissionierer die für einen Kommissioniervorgang notwendigen Informationen anzeigen.

Diese Aufgabe wird mit einem Kommissioniersystem nach Anspruch 1 und einem Verfahren zur Durchführung von Kommissioniervorgängen nach Anspruch 12 gelöst.

Das erfindungsgemäße Kommissioniersystem ist neben den eingangs erwähnten Merkmalen dadurch gekennzeichnet, dass es wenigstens eine vor der Regalfront angeordnete Schiene und wenigstens eine an der Schiene verfahrbare optische Leitvorrichtung umfasst, wobei die optische Leitvorrichtung Mittel zur Aussendung eines ersten Lichtstrahls, eines zweiten Lichtstrahls und eines dritten Lichtstrahls aufweist und dass die Position der optischen Leitvorrichtung an der Schiene und die Ausrichtung der Lichtstrahlen mittels einer Steuereinheit derart einstellbar sind, dass für einen vorgegebenen Kommissioniervorgang der erste Lichtstrahl eine von dem Kommissionierfahrzeug einzunehmende Position vorgibt, der zweite Lichtstrahl ein vorgegebenes Regalfach bzw. ein darin angeordnetes Behältnis oder Bauteil optisch markiert und der dritte Lichtstrahl eine vorgegebene Behältnisaufnahme des Kommissionierfahrzeugs bzw. ein darin aufgenommenes Behältnis oder Bauteil optisch markiert.

Durch die an (wenigstens) einer Schiene, also an einer Führungsstruktur, auf geeignete Weise verfahrbare optische Leitvorrichtung und durch die von geeigneten Mitteln der optischen Leitvorrichtung ausgesandten Lichtstrahlen werden dem Kommissionierer die zur Durchführung eines Kommissioniervorgangs erforderlichen Informationen auf einfache Weise angezeigt. Hierzu bedarf es vorteilhaft keiner speziellen technischen Einrichtungen oder Umrüstungen an dem wenigstens einen Regal bzw. den darin befindlichen Regalfächern und auch keiner besonderen technischen Umrüstung des wenigstens einen Kommissionierfahrzeugs eines Lagersystems. Vielmehr kann das erfindungsgemäße Kommissioniersystem flexibel an die in einem bestehenden Lagersystem gegebene Infrastruktur angepasst werden, indem die Schiene mit optischer Leitvorrichtung an geeigneter Position vor der Regalfront eines Regals, z.B. parallel zu dessen Regalfront, montiert wird.

Die optische Markierung der von dem Kommissionierfahrzeug einzunehmenden Halteposition, eines spezifischen Regalfachs (bzw. eines darin angeordneten Behältnisses oder Bauteils) und einer spezifischen Behältnisaufnahme des Kommissionierfahrzeugs (bzw. eines darin angeordneten Behältnisses oder Bauteils) erfolgt bevorzugt durch je einen geeignet gebündelten bzw. fokussierten Lichtstrahl, der direkt auf das zu markierende Ziel ausgerichtet wird und mit bloßem Auge gut erkennbar sein sollte. Gegebenenfalls bietet es sich hierzu an, im Bereich der jeweiligen Regalfächer und/oder der jeweiligen Behältnisaufnahmen des Kommissionierfahrzeugs geeignete Markierungsflächen vorzusehen, auf denen die optische Markierung gut bzw. besser erkennbar ist.

Als Mittel zur Aussendung der Lichtstrahlen kommt im Prinzip jedweder Punktstrahler in Frage, der zur Erzeugung eines geeigneten Leuchtpunkts eingerichtet ist. Zur Ausrichtung der mit verschiedenen Punktstrahlern ausgesandten Lichtstrahlen können die jeweiligen Punktstrahler - soweit erforderlich -ihrerseits um eine oder mehrere Achsen beweg- bzw. verschwenkbar an der optischen Leitvorrichtung montiert sein. Auch eine Veränderung der Richtung des Lichtstrahls über geeignet beweg- bzw. verschwenkbare Spiegel kommt hierfür in Betracht. Als Lichtquelle können neben herkömmlichen Leuchtmitteln, wie z.B. Glüh- oder Halogenlampen, insbesondere auch Leuchtdioden oder Laserdioden eingesetzt werden. Gegebenenfalls könnte auch ein einziger Laserbeamer zur (gleichzeitigen oder iterativen) Aussendung aller drei Lichtstrahlen in Frage kommen.

Im Rahmen der vorliegenden Erfindung kann besonders bevorzugt vorgesehen sein, dass die Schiene mit daran verfahrbarer optischer Leitvorrichtung oberhalb des Fahrwegs montiert ist, indem z.B. die Schiene an einer Decke hängend montiert wird, was eine in aller Regel hindernisfreie optische Markierung sämtlicher von der optischen Leitvorrichtung zu markierenden "Ziele" ermöglicht. Auch eine Anordnung der Schiene an der Regelfront eines ggfs. dem ersten Regal gegenüberliegenden Regals, z.B. an dessen Oberseite, kommt im Rahmen der Erfindung gegebenenfalls in Frage.

Das Kommissioniersystem weist ferner ein geeignetes Antriebsmittel für die optische Leitvorrichtung (z.B. in Art eines in die Leitvorrichtung integrierten Elektromotors oder eines Zahnriemenantriebs) auf, mit dem die optische Leitvorrichtung entsprechend der Vorgabe durch die Steuereinheit entlang der Schiene bewegt und geeignet positioniert werden kann.

Die Position der optischen Leitvorrichtung an der Schiene sowie die Ausrichtung und Aktivierung der Lichtstrahlen werden durch die Steuereinheit des Kommissioniersystems anhand der dort hinterlegten Vorgaben zu dem jeweils durchzuführenden Kommissioniervorgang gesteuert.

Der erste Lichtstrahl erzeugt bevorzugt einen für den das Kommissionierfahrzeug steuernden Kommissionierer erkennbaren Leuchtpunkt auf dem Boden des vor dem Regal befindlichen Fahrwegs, der dann bei sukzessiver Annäherung des Kommissionierfahrzeugs an die durch den Leuchtpunkt vorgegebene Halteposition vorteilhaft irgendwann auf eine auf dem Kommissionierfahrzeug geeignet angeordnete Skala trifft, welche die korrekte Position für das Kommissionierfahrzeug (im Sinne eines Soll-Auftreffpunkts für den Lichtstrahl) vorgibt und dem Kommissionierer das positionsgenaue Halten des Kommissionierfahrzeugs erleichtert. Die durch den ersten Lichtstrahl zu markierende Position wird dabei von der Steuereinheit vorzugsweise derart gewählt, dass der Kommissionierer den anstehenden Kommissioniervorgang besonders effizient durchführen kann, d.h. insbesondere ohne sich noch weit zu dem durch den zweiten Lichtstrahl markierten Regalfach hin und wieder von diesem weg bewegen zu müssen.

In einer ersten vorteilhaften Weiterbildung der Erfindung ist vorgesehen, dass die wenigsten eine optische Leitvorrichtung aus einer Mehrzahl an unabhängig voneinander an der Schiene verfahrbaren Modulen besteht, wobei jedes Modul wenigstens eines der Mittel zur Aussendung des ersten, zweiten und dritten Lichtstrahls aufweist. Besonders bevorzugt kann dabei vorgesehen sein, dass die optische Leitvorrichtung aus insgesamt drei unabhängig an der Schiene verfahrbaren Modulen besteht, wobei das erste Modul die Mittel zur Aussendung des ersten Lichtstrahls, das zweite Module die Mittel zur Aussendung des zweiten Lichtstrahls und das dritte Modul die Mittel zur Aussendung des dritten Lichtstrahls aufweist. Ebenso denkbar ist jedoch sind andere Systemkonfigurationen, bei denen z.B. ein erstes Modul die Mittel zur Aussendung des ersten Lichtstrahls (zum Zweck der Vorgabe der Halteposition für das Kommissionierfahrzeug) und ein zweites Modul die Mittel zur Aussendung des zweiten und dritten Lichtstrahls aufweist.

Durch eine solchermaßen aus mehreren - eigenständig an der Schiene verfahrbaren - Modulen, die insgesamt die optische Leitvorrichtung bilden, besteht ein größeres Maß an Flexibilität bei der optischen Vorgabe der für verschiedene Kommissioniervorgänge vorzugebenden Haltepositionen des Kommissionierfahrzeugs sowie der optischen Markierung des für den jeweiligen Kommissioniervorgang zu markierenden Regalfachs (bzw. des darin befindlichen Behältnisses oder Bauteils) und der zugeordneten Behältnisaufnahme am Kommissionierfahrzeugs (bzw. des darin aufgenommenes Behältnisses oder Bauteils). Jedes Modul der optischen Leitvorrichtung kann dann für den jeweiligen Kommissioniervorgang eine solche Position einnehmen, von der aus zu markierende Stelle unter Aussendung eines Lichtstrahls besonders gut optisch markiert werden kann. Dies ist insbesondere von Vorteil, wenn z.B. das Kommissionierfahrzeug einen Anhänger mit weiteren Behältnisaufnahmen bzw. Behältnissen für darin aufzunehmende Bauteile aufweist, da dann die von einem ersten Modul an der Schiene einzunehmende Position zur optischen Vorgabe der Halteposition für das Kommissionierfahrzeug ggfs. deutlich entfernt zu einer Position liegen kann, von der aus mit Hilfe des zweiten (und ggfs. dritten) Moduls besonders gut die regal- und kommissionierwagenseitigen Fächer bzw. Behältnisse optisch vorgebbar sind.

Soweit im Rahmen der vorliegenden Erfindung also von der Position der optischen Leitvorrichtung an der Schiene gesprochen wird, so kann diese ggfs. durch die jeweiligen Positionen der einzelnen Module der optischen Leitvorrichtung vorgegeben sein. Und soweit davon gesprochen wird, dass die optische Leitvorrichtung auf eine vorgegebene Position verfahren werden soll, so erfolgt dies im Falle einer Unterteilung der optischen Leitvorrichtung in eine Mehrzahl an Module durch entsprechendes Verfahren der verschiedenen Module, wobei durch eine diesbezügliche Steuerung selbstverständlich Kollisionen der einzelnen Module zu verhindern sind. Weiterhin ist im Rahmen der Erfindung vorteilhaft vorgesehen, dass das Kommissioniersystem eine wenigstens einen Distanzscanner zur Identifikation des Zugriffs auf ein spezifisches Regalfach aufweisende Einrichtung zur automatischen Erkennung des Abschlusses eines Kommissioniervorgangs und/oder einen am Kommissionierfahrzeug vorgesehenen Quittierknopf zur manuellen Quittierung des Abschlusses eines Kommissioniervorgangs aufweist, womit die Steuereinheit - nach Abschluss des betreffenden Kommissioniervorgangs - die optische Leitvorrichtung zu der für den nächsten Kommissioniervorgang vorgesehenen Position verfahren und die Mittel zur Aussendung der drei Lichtstrahlen entsprechend der Vorgaben für den nächsten Kommissioniervorgang verstellen kann.

Soweit dabei eine automatische Erkennung des Abschlusses eines Kommissionierungsvorgangs vorgesehen ist, so kann hierzu beispielsweise auf das aus der EP 0994761 B1 bekannte und einleitend bereits erläuterte System mit wenigstens einem Distanzscanner zur Identifikation des Zugriffs auf ein spezifisches Regalfach zurückgegriffen werden. Der Abschluss eines Kommissionierungsvorgangs kann dabei z.B. dann (oder mit vorgebbarer Zeitverzögerung hierzu) angenommen werden, wenn ein Zugriff auf das dem betreffenden Kommissionierungsvorgang zugeordnete Regalfach detektiert wird. Zur genauen Ausgestaltung eines solchen Systems sei auf die EP 0994761 B1 verwiesen. Eine manuelle Quittierung kann beispielsweise durch Drücken eines am Kommissionierfahrzeug vorgesehen Quittierknopfs erfolgen, wodurch vorteilhaft ein den Abschluss des Kommissioniervorgangs repräsentierendes Signal an die Steuereinheit gesendet werden kann.

Weiterhin kann im Rahmen der Erfindung vorteilhaft vorgesehen sein, dass das Kommissionierfahrzeug einen Reflektor zum Reflektieren eines von der optischen Leitvorrichtung ausgesandten Lichtstrahls (vorzugsweise des ersten Lichtstrahls) und die optische Leitvorrichtung einen Sensor zum Detektieren des von dem Reflektor reflektierten Lichtstrahls aufweist.

Vorteilhaft kann der Sensor hierfür in das Mittel zur Aussendung des ersten Lichtstrahls integriert oder unmittelbar benachbart hierzu angeordnet sein, so dass ein auf dem optischen Weg des ausgesandten Lichtstrahls - mehr oder weniger exakt - zurück reflektierter Lichtstrahl von dem Sensor erfasst wird. Der Reflektor ist dabei bevorzugt so am Kommissionierfahrzeug anzuordnen, dass der erste Lichtstrahl auf diesen trifft, wenn das Kommissionierfahrzeug seine durch den Lichtstrahl vorgegebene Position erreicht hat. Auf diese Weise lässt sich bei einem erfindungsgemäßen System die Einnahme der korrekten Halteposition des Kommissionierfahrzeugs überwachen. Erst in dieser Position kann das System den dritten Lichtstrahl - wegen der dann bekannten Position des Kommissionierfahrzeugs - auf eine darin befindliche Behältnisaufnahme (bzw. ein darin angeordnetes Behältnis) mit hinreichender Genauigkeit ausrichten.

In einer weiteren bevorzugten Ausgestaltung der Erfindung weist das Kommissioniersystem eine Ortungsvorrichtung zur Bestimmung der aktuellen Position der optischen Leitvorrichtung an der Schiene auf. In vorteilhafter Weise kann die Ortungsvorrichtung hierbei eine entlang der Schiene verlaufende Skala mit Ortsinformationen und eine an der optischen Leitvorrichtung (bzw. den einzelnen Modulen) angebrachte Auslesevorrichtung zum Auslesen der Skala aufweisen. Die Skala kann in besonders bevorzugter Weise durch Barcodes gebildet sein und die Auslesevorrichtung entsprechend einen Barcodeleser umfassen.

Hierdurch kann ersichtlich mit besonders einfachen und kostengünstigen Mitteln die genaue Positionierung der optischen Leitvorrichtung an der Schiene überwacht bzw. sichergestellt werden, wobei insbesondere die letztgenannte Variante, bei der die Skala durch Barcodes gebildet wird, eine Genauigkeit im Zehntelmillimeterbereich bietet.

Weiterhin ist es von Vorteil, wenn die Steuereinheit eine Speichereinheit zur Speicherung von zur Vorgabe einer Mehrzahl an Kommissioniervorgängen geeigneten Daten umfasst, wobei jeder einen Kommissioniervorgang betreffende Datensatz geeignete Daten zu einer von dem Kommissionierfahrzeug einzunehmenden Position, zu einem Regalfach und zu einer Behältnisaufnahme des Kommissionierfahrzeugs oder einem darin aufgenommenen Behältnis umfasst. Die Daten zu der von dem Kommissionierfahrzeug einzunehmenden Position können ggfs. von den anderen Daten abgeleitet werden.

Auf diese Weise können durch die Steuereinheit vollautomatisch mehrere Kommissioniervorgänge hintereinander vorgegeben bzw. mit Hilfe des Kommissionierers abgearbeitet werden. Die Steuereinheit weist vorzugsweise eine Eingabeeinheit zur Eingabe der Daten oder eine geeignete Schnittstelle zum Einlesen der Daten von externen Speichermedien auf. Ferner kann die Steuereinheit z.B. über eine Netzwerkverbindung mit anderen Rechnern kommunizieren und von diesen insbesondere Daten für durchzuführende Kommissioniervorgänge empfangen.

In einer weiteren vorteilhaften Ausführungsform weist die Steuereinheit sowie die optische Leitvorrichtung und/oder das Kommissionierfahrzeug eine Schnittstelle zur drahtlosen Datenkommunikation, insbesondere eine WLAN-Schnittstelle, auf. Hierdurch können die Steuereinheit und die optische Leitvorrichtung bzw. das Kommissionierfahrzeug die für den Betrieb des Kommissioniersystems erforderlichen Daten von der Steuereinheit empfangen bzw. mit dieser austauschen.

Des Weiteren ist zweckmäßig vorgesehen, dass das Kommissioniersystem wenigstens eine Regalgruppe mit wenigstens zwei parallelen Regalen mit einander zuweisenden Regalfronten und einem dazwischen angeordneten Fahrweg für ein Kommissionierfahrzeug umfasst, wobei den beiden gegenüberliegenden Regalen genau eine zwischen den Regalfronten angeordnete Schiene und genau eine an der Schiene verfahrbare optische Leitvorrichtung zugeordnet ist.

An dem Kommissionierfahrzeug ist vorteilhaft ein (aktiver oder passiver) RFID-Transponder mit Daten zur Fahrzeugidentifikation und/oder zu den in den Behältnisaufnahmen des Kommissionierfahrzeugs aufgenommenen Behältnissen und/oder darin befindlichen Bauteilen angeordnet. Durch wenigstens ein korrespondierendes RFID-Lesegerät, welches vorzugsweise im Bereich der Fahrwege für das Kommissionierfahrzeug zum berührungslosen Auslesen des RFID-Transponders vorgesehen ist, kann die Einhaltung von dem Kommissionierer ggfs. vorgegebener Fahrwege überwacht werden. Dies bietet sich insbesondere an, wenn das Kommissioniersystem mehrere Regale oder mehrere Regalgruppen aufweist. Vorzugsweise ist dann im Bereich jedes Regals bzw. jeder Regalgruppe, vorteilhaft im Bereich der jeweiligen Einfahrt des den jeweiligen Regalen zugeordneten Fahrwegs, ein solches RFID-Lesegerät vorgesehen, um dem Kommissionierer z.B. mittels geeigneter Ampeln oder sonstiger Signaleinrichtungen anzuzeigen, ob er sich auf dem richtigen und/oder falschen Fahrweg befindet, was die Effizienz des erfindungsgemäßen Kommissioniersystems weiter verbessert. Das erfindungsgemäße Verfahren zur Durchführung von Kommissioniervorgängen, welches unter Verwendung einer Vorrichtung der vorbeschriebenen Art durchgeführt wird, ist gekennzeichnet durch die folgenden Verfahrensschritte:
a) Verfahren der optischen Leitvorrichtung (bzw. der die optische Leitvorrichtung (10) bildenden Module) längs der Schiene auf eine vorgegebene Position,
b) Aussenden eines ersten Lichtstrahls zur Vorgabe einer durch das Kommissionierfahrzeug einzunehmenden Position,
c) Verfahren des Kommissionierfahrzeugs auf die durch den ersten Lichtstrahl vorgegebene Position,
d) Aussenden eines zweiten Lichtstrahls zur optischen Markierung eines vorgegebenen Regalfachs oder eines darin angeordneten Behältnisses,
e) Aussenden eines dritten Lichtstrahls zur optischen Markierung einer vorgegebenen Behältnisaufnahme des Kommissionierfahrzeugs oder eines darin aufgenommenen Behältnisses,
f) Durchführen eines Kommissioniervorgangs unter Berücksichtigung der optischen Markierungen gemäß Schritten d) und e),
g) Wiederholen der Schritte a) bis f) solange weitere Kommissioniervorgänge durchzuführen sind.

Der zeitliche Ablauf der Verfahrensschritte kann gemäß vorstehender Reihenfolge erfolgen, ist jedoch ersichtlich nur insoweit von Relevanz, als dass die Verfahrensschritte derart aufeinander folgen müssen, dass der gemäß Schritt (f) von einem Kommissionierer durchzuführende Kommissioniervorgang bei geeigneter Positionierung des Kommissionierfahrzeugs (Schritt (c)) und unter Berücksichtigung der optischen Markierungen gemäße Schritten (d) und (e) erfolgt. Zum Beispiel könnten die Schritte (d) und (e) gleichzeitig oder in umgekehrter Reihenfolge erfolgen. Ferner kann z.B. auch die Markierung eines Regalfachs gemäß Schritt (d) bereits erfolgen, sobald die optische Leitvorrichtung gemäß Schritt (a) die ihr vorgegebene Position eingenommen hat.

Zweckmäßigerweise sollte allerdings der gemäß Schritt (f) durchzuführende Kommissioniervorgang - zumindest weitgehend - abgeschlossen sein, bevor die optische Leitvorrichtung gemäß der Schritte (g) und (a) auf die für den nächsten Kommissioniervorgang vorgegebene Position verfährt, wobei bei aufeinanderfolgenden Kommissioniervorgängen die Position der optischen Leitvorrichtung (oder eines oder mehrerer ihrer Module) ggfs. auch beibehalten werden kann. Vorteilhaft kann vorgesehen sein, dass Schritt (g) erst dann erfolgt, wenn der Abschluss des vorherigen Kommissioniervorgangs manuell quittiert oder automatisch erkannt wurde.

Bezüglich der Vorteile und bevorzugten Weiterbildungen des erfindungsgemäßen Verfahrens gelten ersichtlich alle bereits in Zusammenhang mit der erfindungsgemäßen Vorrichtung erläuterten Aspekte, so dass zur Vermeidung von Wiederholungen hierauf verwiesen wird.

Im Rahmen des erfindungsgemäßen Verfahrens ist es von besonderem Vorteil, wenn die korrekte Einnahme der gemäß Schritt (c) für das Kommissionierfahrzeug vorgegebenen Position dadurch erkannt wird, dass ein von der optischen Leitvorrichtung ausgesandter Lichtstrahl, insbesondere der erste Lichtstrahl, zur Vorgabe der Position für das Kommissionierfahrzeug auf einen am Kommissionierfahrzeug geeignet angeordneten Reflektor trifft und von diesem zu einem an der optischen Leitvorrichtung angeordneten Sensor reflektiert und durch diesen detektiert wird. Denn erst nach zumindest hinreichend genauer Einnahme der für das Kommissionierfahrzeug vorgegebenen Position ist die optische Leitvorrichtung in der Lage, eine am Kommissionierfahrzeug befindliche Behältnisaufnahme hinreichend genau optisch zu markieren, da bis dahin - sofern die Positionsdaten des Kommissionierfahrzeugs nicht auf andere Weise erfasst und an das System weitergeleitet werden - dessen exakte Position der Steuereinheit unbekannt ist.

Nachfolgend werden zwei Ausführungsbeispiele der Erfindung anhand der Zeichnung näher erläutert. Dabei zeigt
- Fig. 1: ein erstes Ausführungsbeispiel eines erfindungsgemäßen Kommissioniersystems in einer Seitenansicht und
- Fig. 2: eine Draufsicht auf ein zweites Ausführungsbeispiel eines erfindungsgemäßen Kommissionierungssystems.

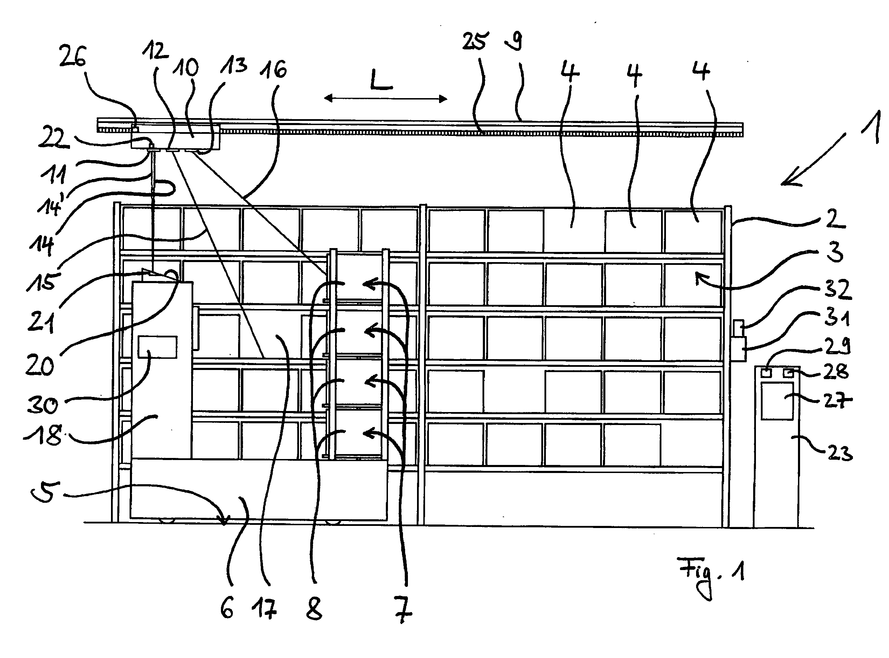

Das in Fig. 1 dargestellte Ausführungsbeispiel eines erfindungsgemäßen Kommissioniersystems 1 umfasst ein Regal 2 mit einer offenen Regalfront 3 und einer Vielzahl an frontseitig zugänglichen Regalfächern 4. Vor dem Regal 2 befindet sich - auf einem hierfür vorgesehenen Fahrweg 5 - ein Kommissionierfahrzeug 6 mit einer Mehrzahl an Behältnisaufnahmen 7 zur Aufnahme einer Mehrzahl an Behältnissen 8.

Vor der Regalfront 3 und oberhalb des Fahrwegs 5 ist eine - mittels einer nicht dargestellten Montagestruktur an einer Decke montierte - Schiene 9 angeordnet, an welcher eine optische Leitvorrichtung 10 hängend und gemäß Doppelpfeil L längs der Schiene 9 verfahrbar gelagert ist. Zur Versorgung der optischen Leitvorrichtung 10 mit elektrischer Energie kann in die Schiene 10 eine z.B. mit einer Spannung von 24 Volt beaufschlagte stromführende Schiene (nicht dargstellt) integriert sein.

An der Unterseite der optischen Leitvorrichtung 10 sind drei Punktstrahler 11, 12, 13 zur Aussendung dreier Lichtstrahlen 14, 15 ,16 angeordnet, die einem nicht dargestellten Kommissionierer die für die Durchführung eines Kommissioniervorgangs notwendigen Informationen vorgeben. Die optische Leitvorrichtung 10 kann ggfs. auch aus einer Mehrzahl separat an der Schiene 9 verfahrbaren Modulen bestehen, wobei dann an jedem Modul wenigstens einer der Punktstrahler 11, 12, 13 angeordnet ist.

Der erste, in der vorliegenden Position der optischen Leitvorrichtung 10 im Wesentlichen senkrecht nach unten gerichtete Lichtstrahl 14 ist zur Vorgabe der von dem Kommissionierfahrzeug 6 einzunehmenden Position vorgesehen, wobei das Kommissionierfahrzeug 6 vorliegend bereits diese Position eingenommen hat. Der zweite Lichtstrahl 15 ist auf ein spezielles Regalfach 17 des Regals 2 gerichtet, in welchem sich vorliegend kein Behältnis 8 befindet. Der dritte Lichtstrahl 16 markiert die oberste der insgesamt vier Behältnisaufnahmen 7 des Kommissionierfahrzeugs 6 bzw. das darin enthaltene Behältnis 8, welches somit - gemäß der durch die optische Leitvorrichtung 10 signalisierten Informationen - in das Regalfach 17 zu geladen werden soll.

Die durch ihre Verfahrbarkeit vorgebbare Position der optischen Leitvorrichtung 10 an der Schiene 9 sowie die Richtung der von Punktstrahlern 11, 12, 13 ausgesandten Lichtstrahlen 14, 15, 16 sind derart einstellbar, dass einem Kommissionierer für jeden anzunehmenden Kommissioniervorgang durch den ersten Lichtstrahl 14 jede mögliche bzw. hierfür sinnvolle Halteposition für das Kommissionierfahrzeug 6 vor dem Regal 2, durch den zweiten Lichtstrahl 15 ein - benachbart zur Halteposition - gelegenes, spezifisches Regalfach 4, 17 (bzw. ein darin befindliches Behältnis 8 oder Bauteil) und durch den dritten Lichtstrahl 16 eine spezifische Behältnisaufnahme 7 des Kommissionierfahrzeugs 6 (bzw. ein darin angeordnetes Behältnis oder Bauteil) optisch markiert werden kann. Hierzu sind entweder die Punktstrahler 11, 12, 13 mittels geeigneter Verstellvorrichtungen verschwenkbar gelagert oder ein im Pfad des betreffenden Lichtstrahls 14, 15, 16 angeordneter Spiegel. Falls bei einem erfindungsgemäßen System auch Kommissioniervorgänge durchführbar sein sollen, bei denen z.B. eine vorgebbare Mehrzahl an Bauteilen aus einem Behältnis in das Regal oder das Kommissionierfahrzeug umgelagert werden soll, so bedarf der Kommissionierer in Ergänzung zu den Lichtstrahlen noch der Information, wie viele Bauteile kommissioniert werden sollen. Hierzu kann beispielsweise eine geeignete Anzeige (z.B. am Kommissionierfahrzeug) vorgesehen sein, die die entsprechende Information - und ggfs. weitere Informationen (z.B. zur nicht stets eindeutigen Frage, ob es sich um einen Ein- oder Auslagerungsvorgang handelt) - von der Steuereinheit 23 erhält und darstellt.

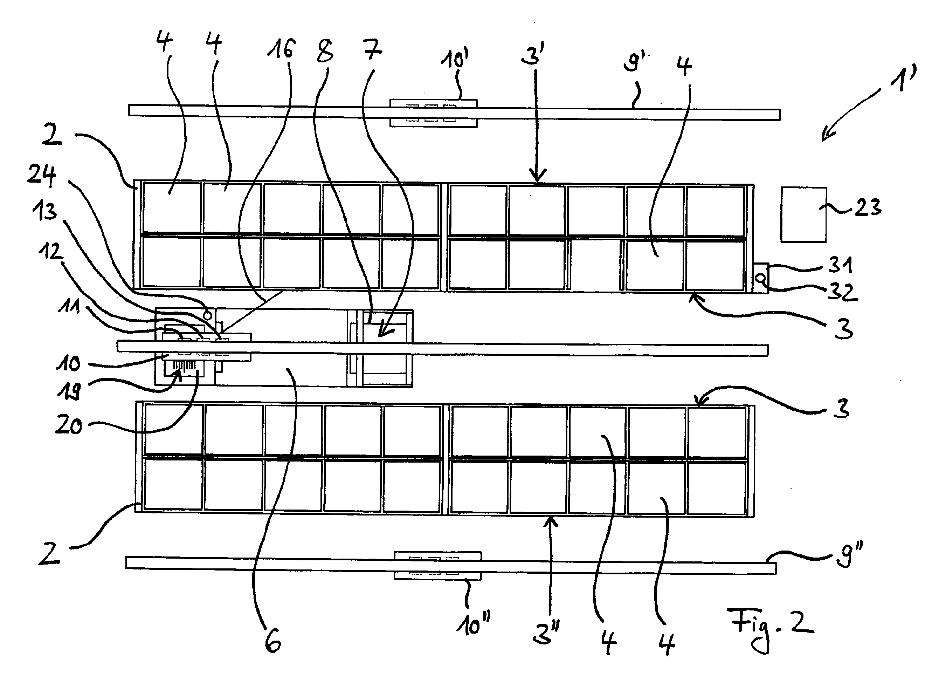

An dem Kommissionierfahrzeug 6 ist auf Seiten eines Bedienpults 18 eine mit einer Skala 19 (vgl. das Kommissionierfahrzeug aus Fig. 2) versehene Markierungsfläche 20 angeordnet, in welcher ein Reflektor 21 zur Reflektion des ersten Lichtstrahls 14 angeordnet ist, wobei das Kommissioniersystem 1 derart eingerichtet ist, dass die korrekte (d.h. durch den Lichtstrahl 14 vorgegebene) Position durch das Kommissionierfahrzeug 6 genau eingenommen ist, wenn der erste Lichtstrahl 14 auf den Reflektor 21 auftrifft und diesen gemäß dem optischen Pfad 14' zu einem in die optische Leitvorrichtung 10 integrierten Sensor 22 reflektiert, der somit ein Signal betreffend die korrekte Einnahme der für das Kommissionierfahrzeug 6 vorgegebenen Position erzeugen und zur (zentralen) Steuereinheit 23 übermitteln kann.

Der Abschluss eines Kommissioniervorgangs kann durch Betätigen eines Quittierungsschalters 24 quittiert werden, was dann ebenfalls entsprechend an die Steuereinheit 23 übermittelt werden kann.

Zur Bestimmung der exakten Position der optischen Leitvorrichtung 10 an der Schiene 9 ist an letzterer eine in Fig. 1 angedeutete und durch eine Barcode-artige Struktur gebildete Skala 25 vorgesehen, die mittels eines in der optischen Leitvorrichtung 10 angeordneten Barcodescanners 26 ausgelesen werden kann. Selbstverständlich kann auch diese Information an die Steuereinheit 23 übermittelt werden.

Die Steuereinheit 23 verfügt über eine Eingabeeinheit 27 zur Eingabe der zur Vorgabe von spezifischen Kommissioniervorgängen notwendigen Daten, die dort in einer Speichereinheit 28 gespeichert werden können. Mittels einer WLAN-Schnittstelle 29 kann die Steuereinheit mit der optischen Leitvorrichtung und dem Kommissionierfahrzeug, in welchen ebenfalls entsprechende WLAN-Schnittstellen (nicht dargestellt) verbaut sind, zum Zwecke des Austauschs der zum Betrieb des Kommissionierungssystems 1 erforderlichen Daten kommunizieren. Auf der Speichereinheit 28 ist hierzu ein Rechenprogramm zur Steuerung des Kommissioniersystems 1 gespeichert, mit dem insbesondere durch die Steuereinheit 23
- die Position der optischen Leitvorrichtung 10,
- die Ausrichtung der von den drei Punktstrahlern 11, 12, 13 zu erzeugenden Lichtstrahlen 14, 16, 16,
- die Position und Art aller Regalfächer 4 des Regals 2, der darin ggfs. angeordneten Behältnisse 8 und Bauteile,
- die Art und Ausstattung der verfügbaren Kommissionierfahrzeuge 6, die Position und Art der darin angeordneten Behältnisaufnahmen 7 und Behältnisse 8 bzw. Bauteile sowie
- die von jedem Kommissionierfahrzeug durchzuführenden Kommissioniervorgänge durch die Steuereinheit 31 verwaltet werden,
wobei ein in der Zeichnung nicht dargestellter Bediener diese Verwaltung vornimmt bzw. überwacht. Darüber hinaus kann die Steuereinheit 23 über die WLAN-Schnittstelle 29 oder eine sonstige Schnittstelle mit anderen nicht dargestellten kompatiblen Rechnern kommunizieren und von diesen unter anderem Befehle für die Verwaltung oder die Steuerung des Kommissioniersystems 1 erhalten oder einholen.

Das Kommissionierfahrzeug 6 weist schließlich noch einen das Fahrzeug eindeutig identifizierbaren RFID-Transponder 30 auf, der bei Vorbeifahrt an dem RFID-Lesegerät 31 von diesem ausgelesen werden kann. Mittels einer Rundleuchte 32 kann dann z.B. ein Warnsignal gegeben werden, falls das Kommissionierfahrzeug 6 in einen falschen Fahrweg eingebogen ist, was durch entsprechend angeordnete RFID-Lesegeräte feststellbar und an die Steuereinheit 23 übermittelbar ist.

Fig. 2 zeigt schließlich noch eine Draufsicht auf ein zweites Ausführungsbeispiel eines erfindungsgemäßen Kommissioniersystems 1', welches zwei parallele und jeweils doppelreihige Regale 2 mit je zwei zu verschiedenen Seiten weisenden Regalfronten 3, 3', 3" aufweist.

Zwischen den einander zuweisenden Regalfronten 3 der beiden doppelreihigen Regale 2 befindet sich genau eine oberhalb eines Fahrwegs 5 für das Kommissionierfahrzeug 6 angeordnete Schiene 9 mit daran verfahrbarer optischer Leitvorrichtung 10, wie bereits vorstehend in Zusammenhang mit dem Ausführungsbeispiel in Fig. 1 erläutert. Die Besonderheit des Kommissioniersystems 1' aus Fig. 2 besteht insbesondere darin, dass dort eine einzige optische Leitvorrichtung 10 zwei einander gegenüberliegenden Regalen 2 zugeordnet ist, indem diese zur Vorgabe aller die einander zuweisenden Regalfronten 3 der verschiedenen Regale 2 betreffenden Kommissioniervorgänge vorgesehen ist. Für die demgegenüber jeweils abgewandten Regalfronten 3', 3'' ist jeweils eine separate optische Leitvorrichtung 10' bzw. 10"mit separater Schiene 9' bzw. 9'' vor der jeweiligen Regalfront 3', 3'' vorgesehen.

## Patentansprüche

1. Kommissioniersystem (1) umfassend
- wenigstens ein Regal (2) mit wenigstens einer Regalfront (3) und einer Mehrzahl an von Seiten der Regalfront (3) zugänglichen Regalfächern (4),
- wenigstens ein Kommissionierfahrzeug (6) mit einer Mehrzahl an Behältnisaufnahmen (7) zur Aufnahme einer Mehrzahl von Behältnissen (8),
- wenigstens einen vor der wenigstens einen Regalfront (3) angeordneten Fahrweg (5) für das wenigstens eine Kommissionierfahrzeug (6), wobei
das Kommissioniersystem (1) ferner wenigstens eine vor der Regalfront (3) angeordnete Schiene (9) umfasst, **dadurch gekennzeichnet, dass** das Kommissioniersystem wenigstens eine an der Schiene (9) verfahrbare optische Leitvorrichtung (10) umfasst, wobei die optische Leitvorrichtung (10) Mittel (11,12,13) zur Aussendung eines ersten Lichtstrahls (14), eines zweiten Lichtstrahls (15) und eines dritten Lichtstrahls (16) aufweist und dass die Position der optischen Leitvorrichtung (10) an der Schiene (9) und die Ausrichtung der Lichtstrahlen (14,15,16) mittels einer Steuereinheit (23) derart einstellbar sind, dass für einen vorgegebenen Kommissioniervorgang der erste Lichtstrahl (14) eine von dem Kommissionierfahrzeug (6) einzunehmende Position vorgibt,
- der zweite Lichtstrahl (15) ein vorgegebenes Regalfach (4) bzw. ein darin befindliches Behältnis (8) oder Bauteil optisch markiert und
- der dritte Lichtstrahl (16) eine vorgegebene Behältnisaufnahme (7) des Kommissionierfahrzeugs (6) bzw. ein darin aufgenommenes Behältnis (8) oder Bauteil optisch markiert.

2. Kommissioniersystem (1) nach Anspruch 1,
**dadurch gekennzeichnet,**
**dass** die wenigsten eine optische Leitvorrichtung aus einer Mehrzahl an unabhängig voneinander an der Schiene (9) verfahrbaren Modulen besteht, wobei jedes Modul wenigstens eines der Mittel (11,12,13) zur Aussendung des ersten, zweiten und dritten Lichtstrahls (14, 15, 16) aufweist.

3. Kommissioniersystem (1) nach Anspruch 1 oder 2,
**dadurch gekennzeichnet,**
**dass** das Kommissioniersystem (1) eine wenigstens einen Distanzscanner zur Identifikation des Zugriffs auf ein spezifisches Regalfach (4) aufweisende Einrichtung (24) zur automatischen Erkennung des Abschlusses eines Kommissioniervorgangs und/oder einen am Kommissionierfahrzeug (6) vorgesehenen Quittierknopf zur manuellen Quittierung des Abschlusses eines Kommissioniervorgangs aufweist.

4. Kommissioniersystem (1) nach einem der vorangehenden Ansprüche,
**dadurch gekennzeichnet,**
**dass** das Kommissionierfahrzeug (6) einen Reflektor (21) zum Reflektieren eines von der optischen Leitvorrichtung (10) ausgesandten Lichtstrahls (14) und die optische Leitvorrichtung (10) einen Sensor (22) zum Detektieren des von dem Reflektor (21) reflektierten Lichtstrahls (14') aufweist.

5. Kommissioniersystem (1) nach einem der vorhergehenden Ansprüche,
**dadurch gekennzeichnet,**
**dass** das Kommissioniersystem (1) eine Ortungsvorrichtung (25, 26) zur Bestimmung der aktuellen Position der optischen Leitvorrichtung (10) an der Schiene (9) aufweist, wobei die Ortungsvorrichtung eine entlang der Schiene (9) verlaufende Skala (25) mit Ortsinformationen und eine an der optischen Leitvorrichtung (10) angebrachte Auslesevorrichtung (26) zum Auslesen der Skala (25) aufweist.

6. Kommissioniersystem (1) nach Anspruch 5,
**dadurch gekennzeichnet,**
**dass** die Skala durch Barcodes gebildet ist und die Auslesevorrichtung einen Barcodescanner umfasst.

7. Kommissioniersystem (1) nach einem der vorhergehenden Ansprüche,
**dadurch gekennzeichnet,**
**dass** die Steuereinheit (23) eine Speichereinheit (28) zur Speicherung von zur Vorgabe einer Mehrzahl an Kommissioniervorgängen geeigneten Daten umfasst, wobei jeder einen Kommissioniervorgang betreffende Datensatz geeignete Daten zu einer von dem Kommissionierfahrzeug (6) einzunehmenden Position, zu einem Regalfach (4) und zu einer Behältnisaufnahme (7) des Kommissionierfahrzeugs (6) oder einem darin aufgenommenen Behältnis (8) umfasst.

8. Kommissioniersystem (1) nach einem der vorhergehenden Ansprüche,
**dadurch gekennzeichnet,**
**dass** die Steuereinheit (23) sowie die optische Leitvorrichtung (10) und/oder das Kommissionierfahrzeug (6) eine Schnittstelle zur drahtlosen Datenkommunikation, insbesondere eine WLAN-Schnittstelle aufweist.

9. Kommissioniersystem (1) nach einem der vorhergehenden Ansprüche,
**dadurch gekennzeichnet,**
**dass** das Kommissioniersystem (1) wenigstens eine Regalgruppe mit wenigstens zwei parallelen Regalen (2) mit einander zuweisenden Regalfronten (3) und einem dazwischen angeordneten Fahrweg (5) für ein Kommissionierfahrzeug (6) umfasst, wobei den beiden gegenüberliegenden Regalen (2) genau eine zwischen den Regalfronten (3) angeordnete Schiene (9) und genau eine an der Schiene (9) verfahrbare optische Leitvorrichtung (10) zugeordnet ist.

10. Kommissioniersystem (1) nach einem der vorhergehenden Ansprüche,
**dadurch gekennzeichnet,**
**dass** an dem Kommissionierfahrzeug (6) ein RFID-Transponder (30) mit Daten zur Fahrzeugidentifikation und/oder zu den in den Behältnisaufnahmen (7) des Kommissionierfahrzeugs (6) aufgenommenen Behältnissen (8) und/oder darin befindlichen Bauteilen angeordnet ist.

11. Kommissioniersystem (1) nach Anspruch 10,
**dadurch gekennzeichnet,**
**dass** im Bereich der Fahrwege (5) für das Kommissionierfahrzeug (6) wenigstens ein RFID-Lesegerät (31) zum berührungslosen Auslesen des an dem Kommissionierfahrzeug (6) angeordneten RFID-Transponders (30) vorgesehen ist.

12. Verfahren zur Durchführung von Kommissioniervorgängen unter Verwendung eines Kommissioniersystems (1) nach einem der vorhergehenden Ansprüche mit den folgenden Verfahrensschritten:
a) Verfahren der optischen Leitvorrichtung (10) längs der Schiene (9) auf eine vorgegebene Position,
b) Aussenden eines ersten Lichtstrahls (14) zur Vorgabe einer durch das Kommissionierfahrzeug (6) einzunehmenden Position,
c) Verfahren des Kommissionierfahrzeugs (6) auf die durch den ersten Lichtstrahl (14) vorgegebene Position,
d) Aussenden eines zweiten Lichtstrahls (15) zur optischen Markierung eines vorgegebenen Regalfachs (4) oder eines darin angeordneten Behältnisses (8),
e) Aussenden eines dritten Lichtstrahls (16) zur optischen Markierung einer vorgegebenen Behältnisaufnahme (7) des Kommissionierfahrzeugs (6) oder eines darin aufgenommenen Behältnisses (8),
f) Durchführen eines Kommissioniervorgangs unter Berücksichtigung der optischen Markierungen gemäß Schritten d) und e),
g) Wiederholen der Schritte a) bis f) solange weitere Kommissioniervorgänge durchzuführen sind.

13. Verfahren nach Anspruch 12,
**dadurch gekennzeichnet,**
**dass** die korrekte Einnahme der gemäß Schritt c) für das Kommissionierfahrzeug (6) vorgegebenen Position dadurch erkannt wird, dass ein von der optischen Leitvorrichtung (10) ausgesandter Lichtstrahl (14) auf einen am Kommissionierfahrzeug (6) geeignet angeordneten Reflektor (21) trifft und von diesem zu einem an der optischen Leitvorrichtung (10) angeordneten Sensor (22) reflektiert und durch diesen detektiert wird.

## Claims

1. A picking system (1) comprising
- at least one shelf (2) comprising at least one shelf front (3) and a plurality of shelf compartments (4), which can be accessed from the shelf front (3),
- at least one picking vehicle (6) comprising a plurality of container receptacles (7) for receiving a plurality of containers (8),
- at least one route (5) arranged upstream of the at least one shelf front (3) for the at least one picking vehicle (6), wherein
the picking system (1) further comprises at least one rail (9) arranged in front of the shelf front (3), **characterized in that** the picking system comprises at least one optical guide device (10), which can be displaced along the rail (9), wherein the optical guide device (10) encompasses means (11, 12, 13) for emitting a first light beam (14), a second light beam (15) and a third light beam (16), and that the position of the optical guide device (10) at the rail (9) and the orientation of the light beams (14, 15, 16) can be adjusted by means of a control unit (23) such that the first light beam (14) specifies a position, which is to be assumed by the picking vehicle (6), for a specified picking process,
- the second light beam (15) optically marks a specified shelf compartment (4), a container (8), or component located therein and
- the third light beam (16) optically marks a specified container receptacle (7) of the picking vehicle (6), a container (8), or component received therein.

2. The picking system (1) according to claim 1,
**characterized in**
**that** the at least one optical guide device consists of a plurality of modules, which can be displaced independent from one another along the rail (9), wherein each module encompasses at least one of the means (11, 12, 13) for emitting the first, second and third light beam (14, 15, 16).

3. The picking system (1) according to claim 1 or 2,
**characterized in**
**that** the picking system (1) encompasses a device (24), which encompasses at least one distance scanner, for identifying the access to a specific shelf compartment (4), for automatically detecting the conclusion of a picking process and/or an acknowledgment button, which is provided at the picking vehicle (6), for manually acknowledging the conclusion of a picking process.

4. The picking system (1) according to one of the preceding claims,
**characterized in**
**that** the picking vehicle (6) encompasses a reflector (21) for reflecting a light beam (14) emitted by the optical guide device (10) and the optical guide device (10) encompasses a sensor (22) for detecting the light beam (14') reflected by the reflector (21).

5. The picking system (1) according to one of the preceding claims,
**characterized in**
**that** the picking system (1) encompasses a locating device (25, 26) for determining the current position of the optical guide device (10) at the rail (9), wherein the locating device encompasses a scale (25), which runs along the rail (9), comprising location information, and a reading device (26), which is attached to the optical guide device (10), for reading the scale (25).

6. The picking system (1) according to claim 5,
**characterized in**
**that** the scale is formed by barcodes and the reading device comprises a barcode scanner.

7. The picking system (1) according to one of the preceding claims,
**characterized in**
**that** the control unit (23) comprises a storage unit (28) for storing data, which are suitable for specifying a plurality of picking processes, wherein each dataset, which relates to a picking process, comprises suitable data relating to a position, which is to be assumed by the picking vehicle (6), relating to a shelf compartment (4) and to a container receptacle (7) of the picking vehicle (6) or a container (8), which is received therein.

8. The picking system (1) according to one of the preceding claims,
**characterized in**
**that** the control unit (23) as well as the optical guide device (10) and/or the picking vehicle (6) encompasses an interface for wireless data communication, in particular a WAN interface.

9. The picking system (1) according to one of the preceding claims,
**characterized in**
**that** the picking system (1) comprises at least one shelf group comprising at least two parallel shelves (2) comprising shelf fronts (3), which face one another, and a route (5), which is arranged therebetween, for a picking vehicle (6), wherein exactly one rail (9), which is arranged between the shelf fronts (3), and exactly one optical guide device (10), which can be displaced along the rail (9), is assigned to the two opposite shelves (2).

10. The picking system (1) according to one of the preceding claims,
**characterized in**
**that** an RFID transponder (30) comprising data relating to the vehicle identification and/or relating to the containers (8), which are received in the container receptacles (7) of the picking vehicle (6), and/or components located therein, is arranged at the picking vehicle (6).

11. The picking system (1) according to claim 10,
**characterized in**
**that** provision is made in the area of the route (5) for the picking vehicle (6) for at least one RFID reader (31) for contactless reading the RFID transponder (30), which is arranged at the picking vehicle (6).

12. A method for carrying out picking processes using a picking system (1) according to one of the preceding claims, comprising the following method steps:
a) displacing the optical guide device (10) along the rail (9) to a specified position,
b) emitting a first light beam (14) for specifying a position, which the picking vehicle (6) is to assume,
c) displacing the picking vehicle (6) to the position, which is specified by the first light beam (14),
d) emitting a second light beam (15) for optically marking a specified shelf compartment (4) or of a container (8) arranged therein,
e) emitting a third light beam (16) for optically marking a specified container receptacle (7) of the picking vehicle (6) or of a container (8) received therein,
f) carrying out a picking process in consideration of the optical markings according to steps d) and e),
g) repeating steps a) to f) as long as further picking processes are to be carried out.

13. The method according to claim 12,
**characterized in**
**that** the correct assuming of the position, which is specified according to step c) for the picking vehicle (6), is detected in that a light beam (14) emitted by the optical guide device (10) strikes a reflector (21), which is suitably arranged at the picking vehicle (6), and is reflected by said reflector to a sensor (22), which is arranged at the optical guide device (10) and is detected by said sensor.

## Revendications

1. Système de préparation de commandes (1) comprenant
- au moins un rayonnage (2) avec au moins une partie frontale (3) de rayonnage et une pluralité de casiers (4) de rayonnage accessibles à partir de la partie frontale (3) de rayonnage,
- au moins un engin (6) de préparation de commandes avec une pluralité de récepteurs de contenants (7) destinés à recevoir une pluralité de contenants (8),
- au moins une trajectoire (5) placée devant l'au moins une partie frontale (3) de rayonnage pour l'au moins un engin (6) de préparation de commandes,
le système de préparation de commandes (1) comprenant par ailleurs au moins un rail (9) placé à l'avant de la partie frontale (3) de rayonnage, **caractérisé en ce que** le système de préparation de commandes comprend au moins un dispositif de guidage (10) optique déplaçable sur le rail (9), le dispositif de guidage (10) optique comportant des moyens (11, 12, 13) destinés à émettre un premier faisceau lumineux (14), un deuxième faisceau lumineux (15) et un troisième faisceau lumineux (16) et **en ce que** la position du dispositif de guidage (10) optique sur le rail (9) et l'orientation des faisceaux lumineux (14, 15, 16) sont réglables au moyen d'une unité de contrôle (23), de telle sorte que pour une opération de préparation de commande prédéfinie, le premier faisceau lumineux (14) prédéfinisse une position qui doit être adoptée par l'engin (6) de préparation de commandes
- le deuxième faisceau lumineux (15) marque optiquement un casier (4) de rayonnage prédéfini ou un contenant (8) ou un élément de construction se trouvant dans celui-ci et
- le troisième faisceau lumineux (16) marque optiquement un récepteur de contenant (7) prédéfini de l'engin (6) de préparation de commandes ou un contenant (8) ou élément de construction réceptionné dans celui-ci.

2. Système de préparation de commandes (1) selon la revendication 1,
**caractérisé en ce que**
l'au moins un dispositif de guidage optique est constitué d'une pluralité de modules déplaçables indépendamment l'un de l'autre sur le rail (9), chaque module comportant au moins l'un des moyens (11, 12, 13) destinés à émettre le premier, le deuxième et le troisième faisceau lumineux (14, 15, 16).

3. Système de préparation de commandes (1) selon la revendication 1 ou la revendication 2,
**caractérisé en ce que**
le système de préparation de commandes (1) comporte une installation (24) comportant au moins un scanner de distance pour l'identification de l'accès à un compartiment (4) de rayonnage spécifique pour la reconnaissance automatique de l'achèvement d'une opération de préparation de commande et/ ou un bouton d'acquittement prévu sur l'engin (6) de préparation de commandes pour l'acquittement manuel de l'achèvement d'une opération de préparation de commande.

4. Système de préparation de commandes (1) selon l'une quelconque des revendications précédentes,
**caractérisé en ce que**
l'engin (6) de préparation de commandes comporte un réflecteur (21) destiné à réfléchir un faisceau lumineux (14) émis par le dispositif de guidage (10) optique et **en ce que** le dispositif de guidage (10) optique comporte un détecteur (22) pour détecter le faisceau lumineux (14') réfléchi par le réflecteur (21).

5. Système de préparation de commandes (1) selon l'une quelconque des revendications précédentes,
**caractérisé en ce que**
le système de préparation de commandes (1) comporte un dispositif de localisation (25, 26) pour la définition de la position actuelle du dispositif de guidage (10) optique sur le rail (9), le dispositif de localisation comportant une échelle graduée (25) s'étendant le long du rail (9) avec des informations de lieu et un dispositif de lecture (26) monté sur le dispositif de guidage (10) optique pour la lecture de l'échelle graduée (25).

6. Système de préparation de commandes (1) selon la revendication 5,
**caractérisé en ce que**
l'échelle graduée est formée par des codes-barres et **en ce que** le dispositif de lecture comprend un scanner de codes-barres.

7. Système de préparation de commandes (1) selon l'une quelconque des revendications précédentes,
**caractérisé en ce que**
l'unité de contrôle (23) comprend une unité mémoire (28) destinée à mémoriser des données adaptées pour prédéfinir une pluralité d'opérations de préparation de commande, chaque ensemble de données concernant une opération de préparation de commande comprenant des données adaptées pour une position devant être adoptée par l'engin (6) de préparation de commandes par rapport à un compartiment (4) de rayonnage et par rapport à un récepteur de contenant (7) de l'engin (6) de préparation de commandes ou à un contenant (8) réceptionné dans celui-ci.

8. Système de préparation de commandes (1) selon l'une quelconque des revendications précédentes,
**caractérisé en ce que**
l'unité de contrôle (23), ainsi que le dispositif de guidage (10) optique et/ou l'engin (6) de préparation de commandes comporte une interface pour la communication de données sans fil, notamment une interface WLAN.

9. Système de préparation de commandes (1) selon l'une quelconque des revendications précédentes,
**caractérisé en ce que**
le système de préparation de commandes (1) comprend au moins un groupe de rayonnages avec au moins deux rayonnages (2) parallèles avec des parties frontales (3) de rayonnage se faisant face et une trajectoire (5) placée entre elles pour un engin (6) de préparation de commandes, un rail (9) placé exactement entre les parties frontales (3) de rayonnage et un dispositif de guidage (10) optique déplaçable exactement sur le rail (9) étant associés au deux rayonnages (2) opposés.

10. Dispositif de préparation de commandes (1) selon l'une quelconque des revendications précédentes,
**caractérisé en ce que**
sur l'engin (6) de préparation de commandes est placé un transpondeur RFID (30) avec des données pour l'identification du véhicule et/ou des contenants (8) réceptionnés dans les récepteurs de contenants (7) de l'engin (6) de préparation de commandes et/ou de pièces de construction se trouvant dans ces derniers.

11. Dispositif de préparation de commandes (1) selon la revendication 10,
**caractérisé en ce que**
dans la zone des trajectoires (5) pour l'engin (6) de préparation de commandes est prévu au moins un lecteur RFID (31) pour la lecture sans contact du transpondeur RFID (30) placé sur l'engin (6) de préparation de commandes.

12. Procédé de réalisation d'opérations de préparation de commandes en utilisant un système de préparation de commandes (1) selon l'une quelconque des revendications précédentes, avec les étapes de procédé suivantes :
a) Déplacement du dispositif de guidage (10) optique le long du rail (9) vers une position prédéfinie,
b) Emission d'un premier faisceau lumineux (14) pour prédéfinir une position devant être adoptée par un engin (6) de préparation de commandes,
c) Déplacement de l'engin (6) de préparation de commandes vers une position prédéfinie par le premier faisceau lumineux (14),
d) Emission d'un deuxième faisceau lumineux (15) pour le marquage optique d'un compartiment (4) de rayonnage prédéfini ou d'un contenant (8) placé dans celui-ci,
e) Emission d'un troisième faisceau lumineux (16) pour le marquage optique d'un récepteur de contenant (7) prédéfini de l'engin (6) de préparation de commandes ou d'un contenant (8) réceptionné dans celui-ci,
f) Réalisation d'une opération de préparation de commande, sous considération des marquages optiques selon les étapes d) et e),
g) Répétition des étapes a) à f) aussi longtemps que des opérations de préparation de commande supplémentaires doivent être réalisées.

13. Procédé selon la revendication 12,
**caractérisé en ce que**
l'adoption correcte de la position prédéfinie selon l'étape c) pour l'engin (6) de préparation de commandes est reconnue **en ce qu'**un faisceau lumineux (14) émis par le dispositif de guidage (10) optique atteint un réflecteur (21) placé de façon adaptée sur l'engin (6) de préparation de commandes et est réfléchi par celui-ci vers un capteur (22) placé sur le dispositif de guidage (10) optique.
